# FASCICULE DE BREVET EUROPEEN

(11) **EP 3 599 660 B1**
(45) Date de publication et mention de la délivrance du brevet: **01.03.2023**
(21) Numéro de dépôt: 19180742.9
(22) Date de dépôt: 18.06.2019
(51) Int. Cl.: H01M 10/617, H01M 10/613, H01M 10/615, H01M 10/6563, H01M 10/658, H01M 10/6571, B60R 16/04, H01M 10/625

(54) **SYSTEME DE CLIMATISATION POUR UNE BATTERIE**
KLIMATISIERUNGSSYSTEM FÜR EINE BATTERIE
AIR-CONDITIONING SYSTEM FOR A BATTERY

(30) Priorité: 26.07.2018 FR 1856948
(43) Date de publication de la demande: 29.01.2020
(73) Titulaire: PSA Automobiles SA, 78300 Poissy (FR)
(72) Inventeur: DAUBANNAY, Alexandre, 92260 FONTENAY AUX ROSES (FR); CASTELLI, Bruno, 92300 LEVALLOIS PERRET (FR)

(56) Documents cités:
- EP-A1- 0 918 358
- WO-A1-2008/074034
- FR-A3- 2 949 096

## Description

La présente invention concerne un système de climatisation pour une batterie d'un véhicule automobile.

Les véhicules automobiles ayant un moteur thermique comportent généralement une ou des batteries reliées au réseau de bord, appelées aussi batteries de servitude, pour alimenter les équipements de ces véhicules, notamment un démarreur d'un moteur thermique. D'autres véhicules, s'ils sont à propulsion électrique ou hybride, comportent une ou des batteries de traction (ou propulsion) reliées à un réseau de puissance pour alimenter les moteurs électriques de traction (ou de propulsion).

On comprendra donc par batterie, dans tout le texte de ce document, un ensemble comprenant au moins un module de batterie contenant au moins une cellule électrochimique, la batterie de servitude étant considérée équivalente à au moins un module. Cette batterie comprend éventuellement des moyens électriques ou électroniques pour la gestion d'énergie électrique de ce au moins un module. Lorsqu'il y a plusieurs modules, ils sont regroupés dans un carter hermétique et forment alors un bloc batterie, ce bloc batterie étant souvent désigné par l'expression anglaise « pack batteries », ce carter contenant généralement une interface de montage, et des bornes de raccordement.

Par ailleurs, on comprendra par cellule électrochimique dans tout le texte de ce document, des cellules générant du courant par réaction chimique, par exemple de type lithium-ion (ou Li-ion), de type Ni-Mh, ou Ni-Cd ou encore plomb.

La capacité et la puissance de ces batteries sont en constante augmentation, notamment grâce à la technologie lithium-ion « Li-ion ». Cependant, ce type de batteries pose des problèmes liés à la température de fonctionnement.

En effet, les batteries au lithium-ion ont des performances limitées avec des températures négatives, et les températures élevées les dégradent rapidement.

Pour améliorer leur fonctionnement à froid, on peut modifier les matériaux des électrodes, ou l'électrolyte, mais ces solutions peuvent dégrader certaines performances des batteries, notamment à chaud, ce qui réduit leur durée de vie. On peut aussi prévoir un nombre plus important de cellules en parallèle. Ces différentes solutions augmentent notablement les coûts des batteries.

Une autre solution consiste à réguler la température de ces batteries. On connaît par exemple, du document FR-A1-2987499 un système de climatisation pour une batterie de servitude d'un véhicule automobile, comprenant un carter hermétique prévu pour recevoir la batterie, ce réceptacle ayant à une première extrémité une introduction d'air, et à une deuxième extrémité une évacuation d'air.

Ce système donne satisfaction mais, lorsque la batterie est entourée par une multitude d'éléments et que, à cause de cela, l'une des deux extrémités n'est pas disponible pour y implanter l'introduction d'air ou l'évacuation d'air, l'intégration de ce système dans le véhicule devient impossible.

Pour pallier à ce problème, il est alors connu par la figure 1(a) du document FR-A1-2967825 d'avoir l'introduction d'air et l'évacuation d'air à une même extrémité du réceptacle fermé. FR2949096 décrit aussi un système de climatisation pour une batterie.

Malheureusement, pour avoir une convection d'air optimale dans le réceptacle fermé, et garantir un échange thermique homogène avec la batterie, l'introduction d'air se prolonge dans le réceptacle par une conduite munie sur sa longueur de petits trous. Cette conduite est volumineuse est oblige à augmenter sensiblement l'encombrement du carter hermétique, ce qui est incompatible avec la multitude d'éléments entourant la batterie.

Le but de l'invention est de remédier à cet inconvénient, notamment en optimisant le cheminement de l'air à l'intérieur du carter hermétique.

A cet effet, l'invention a pour objet un système de climatisation pour une batterie, ce système comprenant la batterie et un carter fermé contenant la batterie tout en formant une lame d'air autour, ce carter comprenant, à travers une même première de ses extrémités, une entrée d'air extérieur débouchant dans la lame d'air et une sortie d'air de la lame d'air débouchant vers l'extérieur du carter, ce système étant tel qu'une cloison interne au carter s'étend de la première extrémité à une seconde extrémité opposée du carter à travers la lame d'air en la séparant en deux volumes d'air, l'entrée d'air débouchant dans l'un des volumes d'air et la sortie d'air s'ouvrant sur l'autre volume d'air, la cloison étant dotée d'un passage d'air entre les deux volumes d'air, à l'opposé de la première extrémité.

On comprendra par « lame d'air » dans tout le texte de ce document, l'air en contact avec la batterie et échangeant des calories avec la batterie, air qui est en outre emprisonné entre la batterie et une paroi interne du carter fermé en vis à vis de la batterie.

On comprendra par « à travers la lame d'air » le fait que la cloison sépare la lame d'air en deux volumes (de lame) d'air, chacun de ces volumes (de lame) d'air formant toujours une lame d'air conformément à la définition précédente. En particulier, l'air de chacun de ces volumes est en contact avec la batterie et échange des calories avec la batterie.

La cloison oblige l'air entrant à parcourir l'ensemble de la lame d'air, ce qui permet un échange thermique de l'air avec la batterie par convection. C'est la cloison qui permet d'avoir l'entrée d'air et la sortie d'air sur la même première extrémité du carter, sans avoir à augmenter le volume du carter, car sans cette cloison, l'air entrant irait directement à la sortie d'air sans parcourir l'ensemble de la lame d'air. On notera que pour une batterie parallélépipédique, l'air cheminera selon une forme en U, la première branche du U s'étendant de l'entrée d'air à la deuxième extrémité, la deuxième branche du U s'étendant de la deuxième extrémité à la sortie d'air, la base du U étant le passage d'air entre les deux volumes d'air.

On comprendra par « à travers une même première de ses extrémités », dans tout le texte de ce document, le fait que l'entrée d'air et la sortie d'air sont suffisamment proches l'une de l'autre pour que la vitesse de l'air la plus faible dans le milieu de l'épaisseur de la lame d'air soit inférieure à 60% de la vitesse moyenne de l'air à l'entrée d'air, sans la présence de la cloison, notamment lorsque l'entrée d'air et la sortie d'air sont juxtaposées. La première extrémité du carter se comprend alors comme la plus petite partie du carter contenant l'entrée d'air et la sortie d'air. L'« extrémité opposée à la première extrémité », se comprenant alors comme la partie du carter la plus éloignée de la première extrémité et qui formerait une paroi de la lame d'air où serait la vitesse de l'air la plus faible dans le milieux de l'épaisseur de la lame d'air sans la présence de la cloison.

Dans un mode de réalisation de l'invention, le carter comprend un bac pour recevoir la batterie et un couvercle de fermeture du bac, la cloison étant positionnée entre le couvercle et le bac.

Cette architecture permet une facilité de montage de la cloison, qui est alors positionnée sur une portée de fermeture entre le bac et le couvercle, après que la batterie soit mise en place dans le bac et avant que le couvercle soit fixé au bac.

Selon une variante de réalisation de l'invention, la cloison est solidaire du couvercle.

En effet, la base de la batterie qui vient au fond du bac est parfois plus large que son sommet. Il est alors judicieux, pour éviter de déformer la cloison et garder une étanchéité à l'air entre la cloison et la batterie, que cette dernière soit solidaire du couvercle. Ainsi la cloison est automatiquement positionnée lors de la mise en place du couvercle et la cloison n'a pas à traverser la base de la batterie.

Selon une variante de réalisation de l'invention, outre la séparation de la lame d'air en deux volumes d'air, la cloison a une fonction d'étanchéité entre le bac et le couvercle.

Ainsi on économise la réalisation d'un joint spécifique entre le couvercle et le bac.

Selon un mode de réalisation de l'invention, la cloison est apte à se déformer pour épouser un contour de la batterie de façon étanche à l'air et indépendamment de dispersions de fabrication et de montage du carter et de la batterie.

En effet, pour un échange thermique optimisé de l'air avec la batterie, il est avantageux que l'air soit obligé de parcourir toute la lame d'air, à savoir traverser l'un des deux volumes, puis le passage d'air, puis l'autre des deux volumes, avant d'atteindre la sortie d'air. La cloison a donc un rôle d'étanchéité entre ces deux volumes, ce rôle étant assuré par l'étanchéité entre la batterie et la cloison. Or, le positionnement de la batterie dans le bac, ses tolérances de fabrication (et celles du bac), et ses variations de formes par dilatation de la batterie à la chaleur, font qu'un espace peut apparaitre entre la cloison et la batterie. Cet espace sera avantageusement comblé par cette déformation de cloison.

Selon une variante de réalisation de l'invention, la cloison est en mousse à cellules fermées.

En effet, cela permet à la fois la déformation de la cloison, l'étanchéité entre le couvercle et le bac par écrasement de la cloison, l'étanchéité de la cloison à l'air (non porosité de ce type de mousse), et la légèreté de la cloison.

Selon une variante de l'invention, la cloison est en au moins deux parties complémentaires.

Selon une variante de réalisation de l'invention, le passage d'air de la cloison est réalisé par une diminution locale d'une section de la cloison entre la batterie et la seconde extrémité opposée du carter, de sorte à laisser l'air circuler d'un volume à l'autre entre la batterie et la cloison.

On notera que ce passage d'air est local et prédéterminé pour assurer le cheminement de l'air, la cloison assurant l'étanchéité à l'air entre les deux volumes sur toutes ses autres sections.

Selon une variante de réalisation, le passage d'air est réalisé par au moins un trou traversant dans la cloison.

Selon une variante de réalisation de l'invention, le carter comprend des plots de maintien en place de la batterie, assurant une épaisseur de la lame d'air suffisante sur toute la surface de la batterie.

Ainsi, même la base de la batterie aura une circulation de l'air pour assurer l'échange thermique entre l'air et la base de la batterie. L'épaisseur de la lame d'air sera par ailleurs garantie au voisinage de chaque plot.

Selon un mode de réalisation de l'invention, l'entrée d'air ou la sortie d'air comprend un ventilateur qui aspire l'air extérieur du carter vers la lame d'air ou aspire l'air de la lame d'air vers l'extérieur du carter, ce ventilateur étant doté d'une résistance chauffante électrique pilotée.

Ainsi l'invention permet une convection forcée de l'air, augmentant significativement l'échange thermique entre l'air et la batterie, soit pour refroidir la batterie, soit pour chauffer la batterie.

L'invention a également pour objet un véhicule comprenant un système de climatisation pour une batterie tel que succinctement décrit ci-dessus.

Selon un mode de réalisation de l'invention, le véhicule comprend une climatisation d'habitacle et un collecteur d'air extérieur, et l'entrée d'air est reliée à ce collecteur d'air extérieur, et/ou à un air frais de la climatisation.

D'autres caractéristiques, buts et avantages de l'invention apparaîtront à la lecture de la description des exemples de réalisation non limitatifs qui vont suivre, faite en référence aux figures 1 à 3 annexées, qui représentent :
- Figure 1 : une vue en coupe transversale schématique du système de climatisation selon l'invention.
- Figure 2 : une vue en coupe longitudinale schématique du système de climatisation selon l'invention.
- Figure 3 : une vue en perspective du système de climatisation selon l'invention.

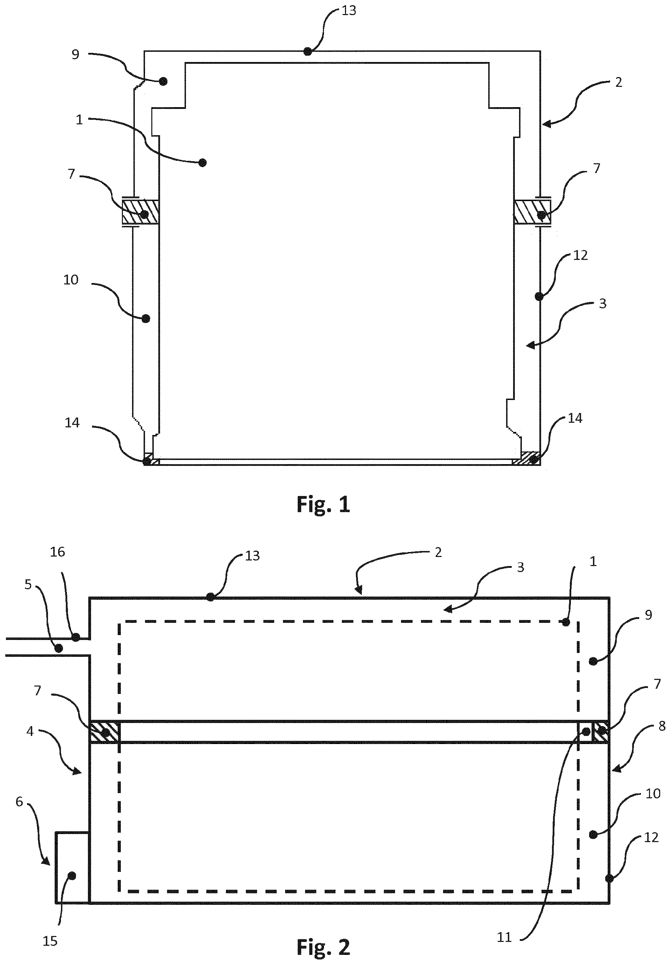

L'ensemble représenté sur la figure 2 comporte un système de climatisation pour une batterie 1, selon un mode de réalisation de l'invention. Ce système comprend la batterie 1 et un carter fermé 2 contenant la batterie tout en formant une lame d'air 3 autour de la batterie. Ce carter 2 est étanche à l'air, et est donc hermétique. La lame d'air 3 est un espace préservé entre la batterie 1 et une paroi intérieure du carter 2. Cet espace est avantageusement d'une épaisseur de 10 mm, mais selon l'espace disponible autour du carter 2, il peut être réduit jusqu'à 5mm ou au contraire agrandi jusqu'à 50mm. Plus précisément, la batterie 1 est conforme à la définition générale qui a déjà été précédemment explicitée. Cette batterie 1 correspond dans l'exemple non limitatif de la figure 2 à une batterie parallélépipédique à cellules électrochimiques de type lithium-ion en remplacement d'une batterie de servitude au plomb. La lame d'air 3 est alors l'espace préservé entre au moins trois faces de la batterie 1 et la paroi intérieure du carter 2.

Toujours pour cet exemple de la figure 2, ce carter fermé 2 comprend, à travers une même première de ses extrémités 4, une entrée d'air extérieur 5 débouchant dans la lame d'air 3 et une sortie d'air 6 de la lame d'air 3 débouchant vers l'extérieur du carter 2. L'entrée d'air 5 est fluidiquement reliée par une conduite 16 à une source d'air froid, non représentée, par exemple venant d'une climatisation d'habitacle de véhicule ou tout simplement l'air extérieur (ambiant) au véhicule. Une cloison interne 7 au carter 2 s'étend de la première extrémité 4 à une seconde extrémité 8 opposée du carter 2 à travers la lame d'air 3 en la séparant en deux volumes d'air 9,10. L'entrée d'air 5 débouche dans l'un des volumes d'air 9, et la sortie d'air 6 s'ouvre sur l'autre volume d'air 10, la cloison 7 étant dotée d'un passage d'air 11 entre les deux volumes d'air 9, 10, à l'opposé de la première extrémité. Il est bien entendu qu'il peut y avoir plusieurs cloisons 7 comme il peut y avoir plus de deux volumes d'air, mais dans l'exemple illustré de la figure 2, il n'y a qu'une seule cloison 7, plane, qui coupe la lame d'air 3 en deux volumes 9, 10, l'air, l'un des volumes 9 communiquant avec l'autre volume 10 par le passage d'air 11. Cette cloison 7 n'est pas obligatoirement plane, sa forme étant fonction de l'architecture de la batterie 1 et du carter 2. L'air cheminera donc selon une forme en U (un chemin en forme de U), la première branche du U s'étendant de l'entrée d'air 5 à la deuxième (seconde) extrémité 8, la deuxième branche du U s'étendant de la deuxième extrémité 8 à la sortie d'air 6, la base du U étant le passage d'air 11 entre les deux volumes d'air 9, 10. Dans d'autres exemples avec plusieurs cloisons 7, le cheminement de l'air peut être en forme de S, ou serpenter plusieurs fois avant d'atteindre la sortie d'air 6.

On notera que dans la figure 2, la batterie 1 est représentée en pointillés, pour mieux montrer la cloison 7 et le passage d'air 11. Dans Cette section longitudinale de la figure 2, les sections de coupe de la cloison 7 sont hachurées, mais le carter 2 étant simplement schématisé, il est simplement représenté par un trait tout comme les autres éléments.

L'exemple de la figure 2 illustre en outre le carter 2 comprenant un bac 12 pour recevoir la batterie 1, et un couvercle 13 de fermeture du bac 12, la cloison 7 étant positionnée entre le couvercle 13 et le bac 12. Avantageusement, la cloison 7 est solidaire du couvercle 13, par exemple en étant collé au couvercle 13, ou inséré et bloqué dans une gorge du couvercle 13 par précontrainte de la cloison 7 (gorge non illustrée).

Outre la séparation de la lame d'air 3 en deux volumes d'air 9,10, la cloison 7 a une fonction d'étanchéité entre le bac 12 et le couvercle 13, permettant de maintenir l'étanchéité du carter 2. La cloison 7 est apte à se déformer pour épouser un contour de la batterie 1, de façon étanche à l'air et indépendamment de dispersions de fabrication et de montage du carter 2 et de la batterie 1. Dans l'exemple illustré, ce contour de la batterie 1 est constitué par quatre des six faces de la batterie 1, formant ainsi un rectangle. Ce contour peut être d'une toute autre forme, dans le cas d'un pack batterie, comme cela sera expliqué un peu plus loin. La déformation de la cloison 7 est par exemple une compression de la cloison 7 sur la batterie 1 dans le plan de la cloison, mais peut être aussi une flexion de la cloison 7 contre la batterie 1 lors d'une opération de montage. On comprendra que dans ce cas, une ouverture de la cloison 7 recevant la batterie 1, est plus petite que la section de la batterie correspondante à cette ouverture, créant ainsi la compression ou la flexion de la cloison.

Cette cloison 7 est par exemple en mousse à cellules fermées, comme les mousses caoutchouc ayant une résistance au feux.

Même si la figure 2 ne l'illustre pas, la cloison 7 peut être en matière rigide, c'est-à-dire non déformable par la seule force d'un opérateur, et comporter des lèvres pour assurer les étanchéités entre le carter 2 et la cloison, entre le couvercle et le bac, entre la cloison 7 et la batterie 1. Qu'elle soit rigide ou pas, pour faciliter son montage, la cloison 7 peut, en variante, être en au moins deux parties complémentaires (non illustrées), par exemple deux U formant un rectangle pour la batterie 1 de la figure 2.

La figure 2 illustre également le passage d'air 11 de la cloison 7, réalisé par une diminution locale d'une section de la cloison 7 entre la batterie 1 et la seconde extrémité 8 opposée du carter 2, de sorte à laisser l'air circuler d'un volume 9 à l'autre 10 entre la batterie 1 et la cloison 7, mais uniquement entre la batterie 1 et la seconde extrémité 8 opposée du carter 2. Cette diminution de la section de la cloison 7 se fait sur une longueur déterminée de façon à obtenir une section de passage de l'air 11 adaptée à un débit d'air maximal prédéterminé, par exemple sur toute une face de la batterie 1. En variante, ce passage d'air 11 peut être réalisé par des trous traversant dans la cloison 7, ou encore une absence de cloison locale, ou encore un conduit intégré au carter 2 reliant les deux volumes 9, 10.

Dans un autre exemple de réalisation non illustré, la batterie 1 comprend plusieurs modules qui eux-mêmes comprennent au moins une cellule. Le carter 2 contient alors l'ensemble des modules, cet ensemble de modules et le carter 2 formant un pack batterie. La lame d'air 3 est alors l'espace préservé entre l'ensemble des modules et la paroi intérieure du carter 2, de sorte que la lame d'air 3 chemine entre cette paroi intérieure et les modules, et entre les modules s'ils sont disjoints. Dans ce même exemple, la cloison 7 comprendra alors plusieurs ouvertures recevant les plusieurs modules, prenant alors la forme d'une grille, le contour de la batterie 1 prenant alors une forme complémentaire à cette grille.

La figure 1 illustre le même exemple que la figure 2, mais est une section orthogonale à la figure 2. Les mêmes éléments ont les mêmes références que la figure 2. A la différence de la figure 2, la figure 1 illustre la batterie 1 en trait plein, et montre le carter 2 comprenant des plots 14 de maintien en place de la batterie 1, assurant une épaisseur de la lame d'air 3 suffisante sur toute la surface de la batterie 1, c'est-à-dire ici sur les six faces de la batterie 1. Ainsi, le fond de la batterie 1 n'est pas en contact avec le fond du bac 12 qui lui est en vis-à-vis (à l'exception des plots 14 bien entendu), la lame d'air 3 étant alors présente sur les six faces de la batterie 1.

Ces plots 14 sont avantageusement intégrés au carter 2, par exemple la paroi interne du carter 2 prenant la forme des plots, mais dans une variante ils sont des plots 14 rapportés au carter 2.

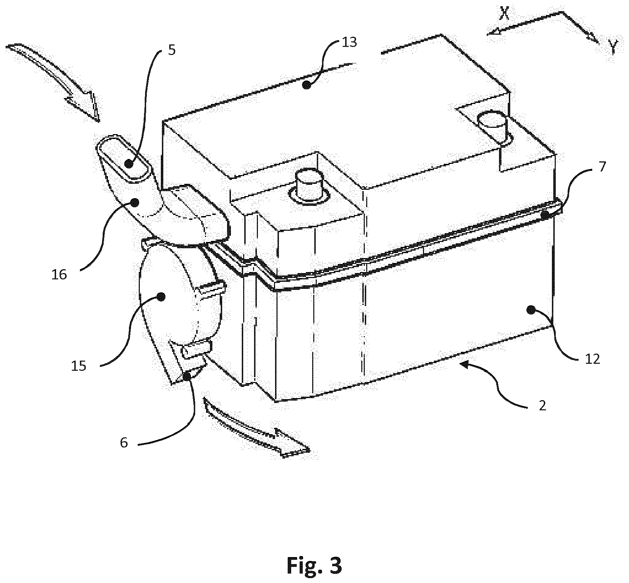

La figure 3 est une vue en perspective du système de climatisation selon l'invention, les mêmes éléments ayant les mêmes références que les figures 1 et 2. La figure 3 illustre la sortie d'air 6 comprenant un ventilateur 15 qui aspire l'air de la lame d'air 3 vers l'extérieur du carter 2, ce ventilateur 15 étant doté d'une résistance chauffante électrique pilotée. L'air extérieur venant de la source d'air froid (non représentée) se trouve alors indirectement aspiré par l'entrée d'air 5, via la conduite 16 et la lame d'air 3, parcours les deux volumes d'air 9, 10 et le passage d'air 11, assurant ainsi un bon refroidissement de la batterie 1. Selon la température de la batterie, le ventilateur 15 est piloté en rotation inverse et aspire l'air extérieur par la sortie d'air 6, réchauffe l'air par sa résistance chauffante, cet air étant alors évacué par l'entrée d'air 5.

Dans une variante de réalisation, l'entrée d'air 5 comprend le ventilateur 15 qui aspire l'air extérieur du carter 2 vers la lame d'air 3, ce ventilateur 15 étant doté d'une résistance chauffante électrique pilotée. Dans ce cas, le ventilateur 15 n'a pas à inverser sa rotation, il suffit d'activer ou non sa résistance chauffante pour respectivement chauffer ou refroidir la batterie 1.

Ce système de climatisation est avantageusement intégré dans un véhicule de type automobile, la batterie 1 étant une batterie de servitude ou un pack batteries pour des véhicules à propulsion électrique ou hybride. Ce véhicule comprend une climatisation d'habitacle et un collecteur d'air extérieur, et l'entrée d'air 5 est reliée à ce collecteur d'air extérieur, et/ou à un air frais de la climatisation via la conduite 16.

Ainsi, l'invention telle que décrite, permet d'avoir l'entrée d'air 5 et la sortie d'air 6 sur la même première extrémité 4 du carter 2, sans avoir à augmenter le volume du carter 2 et tout en assurant une gestion thermique de la batterie 1 efficace.

## Revendications

1. Système de climatisation pour une batterie (1), ce système comprenant la batterie (1) et un carter fermé (2) contenant la batterie tout en formant une lame d'air (3) autour, ce carter fermé (2) comprenant, à travers une même première de ses extrémités (4), une entrée d'air extérieur (5) débouchant dans la lame d'air (3) et une sortie d'air (6) de la lame d'air (3) débouchant vers l'extérieur du carter (2), **caractérisé en ce qu'**une cloison interne (7) au carter (2) s'étend de la première extrémité (4) à une seconde extrémité (8) opposée du carter (2) à travers la lame d'air (3) en la séparant en deux volumes d'air (9,10), l'entrée d'air (5) débouchant dans l'un des volumes d'air (9), et la sortie d'air (6) s'ouvrant sur l'autre volume d'air (10), la cloison (7) étant dotée d'un passage d'air (11) entre les deux volumes d'air (9, 10), à l'opposé de la première extrémité.

2. Système de climatisation selon la revendication 1, le carter (2) comprenant un bac (12) pour recevoir la batterie (1), et un couvercle (13) de fermeture du bac (12), **caractérisé en ce que** la cloison (7) est positionnée entre le couvercle (13) et le bac (12).

3. Système de climatisation selon la revendication 1, le carter (2) comprenant un bac (12) pour recevoir la batterie (1), et un couvercle (13) de fermeture du bac (12), **caractérisé en ce que** la cloison (7) est solidaire du couvercle (13).

4. Système de climatisation selon la revendication 2 ou 3, **caractérisé en ce que**, outre la séparation de la lame d'air (3) en deux volumes d'air (9,10), la cloison (7) a une fonction d'étanchéité entre le bac (12) et le couvercle (13).

5. Système de climatisation selon l'une quelconque des revendications précédentes, **caractérisé en ce que** la cloison (7) est apte à se déformer pour épouser un contour de la batterie (1) de façon étanche à l'air et indépendamment de dispersions de fabrication et de montage du carter (2) et de la batterie (1).

6. Système de climatisation selon l'une quelconque des revendications précédentes, **caractérisé en ce que** la cloison (7) est en mousse à cellules fermées.

7. Système de climatisation selon l'une quelconque des revendications précédentes, **caractérisé en ce que** la cloison (7) est en au moins deux parties complémentaires.

8. Système de climatisation selon l'une quelconque des revendications précédentes, **caractérisé en ce que** le passage d'air (11) de la cloison (7) est réalisé par une diminution locale d'une section de la cloison (7) entre la batterie (1) et la seconde extrémité (8) opposée du carter (2), de sorte à laisser l'air circuler d'un volume (9) à l'autre (10) entre la batterie (1) et la cloison (7).

9. Système de climatisation selon l'une quelconque des revendications précédentes, **caractérisé en ce que** le carter (2) comprend des plots (14) de maintien en place de la batterie (1), assurant une épaisseur de la lame d'air (3) suffisante sur toute la surface de la batterie (1).

10. Système de climatisation selon l'une quelconque des revendications précédentes, **caractérisé en ce que** l'entrée d'air (5) ou la sortie d'air (6) comprend un ventilateur (15) qui aspire l'air extérieur du carter (2) vers la lame d'air (3) ou aspire l'air de la lame d'air (3) vers l'extérieur du carter (2), ce ventilateur (15) étant doté d'une résistance chauffante électrique pilotée.

## Patentansprüche

1. Klimaanlage für eine Batterie (1), wobei diese Anlage die Batterie (1) und ein geschlossenes Gehäuse (2) umfasst, das die Batterie enthält, während es einen Luftspalt (3) um sie herum bildet, wobei dieses geschlossene Gehäuse (2) durch dasselbe umfasst ersten seiner Enden (4) einen in den Luftspalt (3) mündenden Außenlufteinlass (5) und einen aus dem Luftspalt (3) ins Äußere des Gehäuses (2) mündenden Luftauslass (6), **dadurch gekennzeichnet dass** sich eine innere Trennwand (7) des Gehäuses (2) von dem ersten Ende (4) zu einem gegenüberliegenden zweiten Ende (8) des Gehäuses (2) durch den Luftspalt (3) erstreckt, indem sie ihn in zwei Luftvolumina trennt (9,10), wobei der Lufteinlass (5) in eines der Luftvolumen (9) mündet und der Luftauslass (6) in das andere Luftvolumen (10) mündet, wobei die Trennwand (7) mit einer Luft versehen ist Durchgang (11) zwischen den beiden Luftvolumina (9, 10) gegenüber dem ersten Ende.

2. Klimaanlage nach Anspruch 1, wobei das Gehäuse (2) eine Schale (12) zur Aufnahme der Batterie (1) und einen Deckel (13) zum Verschließen der Schale (12) umfasst, **dadurch gekennzeichnet, dass** die Trennwand (7) ist zwischen der Abdeckung (13) und der Ablage (12) positioniert.

3. Klimaanlage nach Anspruch 1, wobei das Gehäuse (2) eine Schale (12) zur Aufnahme der Batterie (1) und einen Deckel (13) zum Verschließen der Schale (12) umfasst, **dadurch gekennzeichnet, dass** die Trennwand (7) ist am Deckel (13) befestigt.

4. Klimaanlage nach Anspruch 2 oder 3, **dadurch gekennzeichnet, daß** die Trennwand (7) neben der Trennung des Luftspaltes (3) in zwei Luftvolumina (9,10) eine Dichtfunktion zwischen Tank (12) und den Deckel (13).

5. Klimaanlage nach einem der vorhergehenden Ansprüche, **dadurch gekennzeichnet, dass** die Trennwand (7) luftdicht und unabhängig von fertigungstechnischen Dispersionen und Gehäuse (2) und an eine Kontur der Batterie (1) verformbar ist Batterie (1).

6. Klimaanlage nach einem der vorhergehenden Ansprüche, **dadurch gekennzeichnet, dass** die Trennwand (7) aus geschlossenzelligem Schaumstoff besteht.

7. Klimaanlage nach einem der vorhergehenden Ansprüche, **dadurch gekennzeichnet, dass** die Trennwand (7) aus mindestens zwei komplementären Teilen besteht.

8. Klimaanlage nach einem der vorangehenden Ansprüche, **dadurch gekennzeichnet, dass** der Luftdurchlass (11) der Trennwand (7) durch eine lokale Reduzierung eines Abschnitts der Trennwand (7) zwischen der Batterie (1) und der erzeugt ist gegenüberliegendes zweites Ende (8) des Gehäuses (2), um zu ermöglichen, dass die Luft zwischen der Batterie (1) und der Trennwand (7) von einem Raum (9) zum anderen (10) zirkulieren kann.

9. Klimaanlage nach einem der vorhergehenden Ansprüche, **dadurch gekennzeichnet, dass** das Gehäuse (2) Noppen (14) zum Halten der Batterie (1) aufweist, die eine ausreichende Dicke des Luftspalts (3) über die gesamte Fläche gewährleisten der Batterie (1).

10. Klimaanlage nach einem der vorhergehenden Ansprüche, **dadurch gekennzeichnet, dass** der Lufteinlass (5) oder der Luftauslass (6) einen Lüfter (15) umfasst, der Luft von außerhalb des Gehäuses (2) in Richtung des Luftspalts ansaugt (3) oder saugt die Luft aus dem Luftspalt (3) zur Außenseite des Gehäuses (2), wobei dieser Lüfter (15) mit einem geregelten elektrischen Heizwiderstand ausgestattet ist.

## Claims

1. Air conditioning system for a battery (1), this system comprising the battery (1) and a closed casing (2) containing the battery while forming an air gap (3) around it, this closed casing (2) comprising, through the same first of its ends (4), an outside air inlet (5) opening into the air gap (3) and an air outlet (6) from the air gap (3) opening towards the exterior of the casing (2), **characterized in that** an internal partition (7) to the casing (2) extends from the first end (4) to an opposite second end (8) of the casing (2) through the air gap (3) by separating it into two air volumes (9,10), the air inlet (5) opening into one of the air volumes (9), and the outlet d air (6) opening onto the other air volume (10), the partition (7) being provided with an air passage (11) between the two air volumes (9, 10), opposite the first end.

2. Air conditioning system according to Claim 1, the casing (2) comprising a tray (12) to receive the battery (1), and a cover (13) for closing the tray (12), **characterized in that** the partition (7) is positioned between the lid (13) and the container (12).

3. Air conditioning system according to Claim 1, the casing (2) comprising a tray (12) to receive the battery (1), and a cover (13) for closing the tray (12), **characterized in that** the partition (7) is secured to the cover (13).

4. Air conditioning system according to Claim 2 or 3, **characterized in that**, in addition to the separation of the air gap (3) into two volumes of air (9,10), the partition (7) has a sealing function between the tank (12) and the lid (13).

5. Air-conditioning system according to any one of the preceding claims, **characterized in that** the partition (7) is capable of deforming to match a contour of the battery (1) in an airtight manner and independently of manufacturing dispersions and housing (2) and battery (1).

6. Air conditioning system according to any one of the preceding claims, **characterized in that** the partition (7) is made of closed cell foam.

7. Air conditioning system according to any one of the preceding claims, **characterized in that** the partition (7) is in at least two complementary parts.

8. Air conditioning system according to any one of the preceding claims, **characterized in that** the air passage (11) of the partition (7) is produced by a local reduction of a section of the partition (7) between the battery (1) and the opposite second end (8) of the casing (2), so as to allow the air to circulate from one volume (9) to the other (10) between the battery (1) and the partition (7) .

9. Air conditioning system according to any one of the preceding claims, **characterized in that** the casing (2) comprises studs (14) for holding the battery (1) in place, ensuring a thickness of the air gap (3) sufficient over the entire surface of the battery (1).

10. Air conditioning system according to any one of the preceding claims, **characterized in that** the air inlet (5) or the air outlet (6) comprises a fan (15) which draws in air from outside the housing (2) towards the air gap (3) or sucks the air from the air gap (3) towards the outside of the casing (2), this fan (15) being equipped with a controlled electric heating resistor.
